# EUROPÄISCHE PATENTANMELDUNG

(11) **EP 3 885 640 A2**
(43) Veröffentlichungstag der Anmeldung: **29.09.2021**
(21) Anmeldenummer: 21160505.0
(22) Anmeldetag: 03.03.2021
(51) Int. Cl.: F17C 7/00

(54) **VORRICHTUNG ZUM ZUFÜHREN EINES GASFÖRMIGEN KRAFTSTOFFS AN EINEN MOTOR**

(30) Priorität: 24.03.2020 CH 3542020
(71) Anmelder: Liebherr Machines Bulle SA, 1630 Bulle (CH)
(72) Erfinder: Puran, Bakir, 1696 Vuisternens-en-Ogoz (CH); Seba, Dr. Bouzid, 1632 Broc (CH); Weiß, Ulrich, 1752 Villars-sur-Glâne (CH)
(74) Vertreter: Laufhütte, Dieter

(57) **Zusammenfassung**

Die Erfindung betrifft eine Vorrichtung zum Zuführen eines gasförmigen Kraftstoffs an einen Motor, die einen Gasdruckspeicher zum Aufnehmen von unter hohem Druck stehenden gasförmigen Kraftstoff, einen Gaszwischenspeicher zum Aufnehmen von unter mittlerem Druck stehenden gasförmigen Kraftstoff, eine Gaszuführvorrichtung zum Abgeben eines gasförmigen Kraftstoffs in einen Motorbrennraum, eine erste Gasleitung, die den Gasdruckspeicher mit dem Gaszwischenspeicher verbindet und deren Gasdurchfluss über ein erstes Ventil regelbar ist, eine zweite Gasleitung, die den Gasdruckspeicher mit dem Gaszwischenspeicher verbindet und deren Gasdurchfluss über ein zweites Ventil regelbar ist, und eine dritte Gasleitung umfasst, die den Gaszwischenspeicher mit der Gaszuführvorrichtung verbindet. Ferner ist die Vorrichtung dadurch gekennzeichnet, dass in der zweiten Gasleitung ein Kompressor angeordnet ist, um einen Druck eines vom Gasdruckspeicher hin zum Gaszwischenspeicher strömenden gasförmigen Kraftstoffs zu erhöhen.

## Beschreibung

Die vorliegende Erfindung betrifft eine Vorrichtung zum Zuführen eines gasförmigen Kraftstoffs an einen Motor.

Aufgrund legislativer Änderungen in der Besteuerung von Kraftstoffen und/oder der Abgasgesetzgebung kann der Einsatz von gasförmigen Kraftstoffen selbst für Fern-LKWs und/oder für mobile Arbeitsmaschinen zur Realität werden. Unter den gasförmigen Kraftstoffen bietet beispielsweise Wasserstoff die Option einer nahezu klimaneutralen "Well-to-Tank Bereitstellung". Darüber hinaus kann Wasserstoff auch in mobilen Brennstoffzellenantrieben und somit in tatsächlich emissionsfreien (Zero Emission) Fahrzeugen eingesetzt werden. Wasserstoffverbrennungsmotoren bieten das Potenzial selbst strenge Abgasgrenzwerte allein durch innermotorische Maßnahmen einhalten zu können, weswegen zumindest das Abgasnachbehandlungssystem erheblich reduziert werden kann.

Druckwasserstoff weist zwar auch unter einem beispielhaften Druckniveau von 700 bar eine volumetrisch geringere Energiedichte auf als andere bekannte Arten der Speicherung wie bspw. Flüssigwasserstoff, Kryogenwasserstoff oder bspw. in Form von Methan als chemisch gebundener Wasserstoff, hat aber den Vorteil, dass die Handhabung unter gemeinsamer Berücksichtigung der Betankung und der On-board Konditionierung vergleichsweise einfach ist. Wasserstoff-Adsorptionsspeicher weisen ein extrem hohes Eigengewicht auf.

Für Druckwasserstoff sind die Betankung, On-board Speicherung und Konditionierung zur Kraftstoffversorgung einer Verbrennungskraftmaschine inzwischen relativ weit ausgereift. Für Drucktanks und Drucktank-Systeme haben sich 350 bar und 700 bar als gewisse Standardwerte etabliert.

Inzwischen zeigt sich im Trend der Entwicklungen, dass auch bei Gasmotoren eine Brenngas-Hochdruck-Einspritzung eine zunehmende Verbreitung findet. Eine Steigerung des Brenngas-Einspritzdrucks erlaubt zusätzlich eine Verschiebung des Zündwinkels korrespondierend in die Richtung der oberen Kolben-TotpunktStellung, was eine Anhebung der Klopfgrenze bewirkt. Letzteres erlaubt eine Vergrößerung des Verdichtungsverhältnisses, wobei hierbei durch den gesteigerten Brenngas-Einspritzdruck das Verdichtungsverhältnisses bis zur Ausschöpfung der angehobenen Klopfgrenze vergrößert werden kann.

Insgesamt verschafft dies einen zusätzlichen Korridor, in dem eine Wirkungsgradsteigerung und/oder eine höhere Motorleistung bereitgestellt werden kann. Innerhalb dieses Korridors kann im Zuge einer Motorsteuerung eine Optimierung zwischen dem potenziellen Zugewinn an Motorleistung und der potenziellen Wirkungsgradsteigerung vorgenommen werden. In einem Extremfall wird der gesamte Zugewinn für die Anhebung der Vollastkennlinie genutzt. In dem anderen Extremfall wird der gesamte Zugewinn für eine Wirkungsgradsteigerung unter Beibehaltung der Vollastkennlinie genutzt. Die geschilderten Zusammenhänge gelten generell für Gasmotoren und insbesondere für Wasserstoffmotoren.

Ausgehend von der Betriebssituation eines vollständig befüllten Gasdruckspeichers stellt der Bedarf hoher Einspritzdrücke zunächst sogar einen positiven Zusammenhang dar, weil ein hoher Anteil der zur Speicher-Befüllung eingesetzten Kompressionsenergie für den Betrieb der Verbrennungskraftmaschine genutzt wird.

Mit zunehmender Entleerung des Gasdruckspeichers stellt sich klarerweise und zwangsläufig die Situation ein, dass der darin vorhandene Druck des Brenngases ab einem bestimmten Ladezustand nicht mehr ausreichend hoch ist, um den Solldruck der Brenngas-Einspritzung abzudecken.

Sofern der Betrieb des Gasmotors für besonders hohe Einspritzdrücke von einigen hundert bar vorgesehen ist, stellt sich dieser bestimmte Ladezustand ein, obwohl die prinzipiell im Gasdruckspeicher vorhandene chemische Energie- und Kompressionsenergie der verbliebenen Brenngasmenge sehr hoch ist.

Für einen Wasserstoffmotor könnte der Soll-Raildruck in einer Größenordnung von 300 bar liegen und der Gasdruckspeicher für 700 bar ausgelegt sein. Bereits hieran wird klar, dass der unmittelbar aus dem Gasdruckspeicher nutzbare Energieinhalt nur ca. der Hälfte des vorhandenen Energieinhalts entspricht, da bei einem Absinken des Drucks im Gasdruckspeicher unter 300 bar der darin verbliebene gasförmige Kraftstoff resp. das darin verbliebene Brenngas dem Brennraum bzw. dem Rail nicht mehr bei dem gewünschten Druck zugeführt werden kann.

Bei den bisher kommerziell eingesetzten Gasmotoren erfolgt die Brenngaszuführung noch nicht über eine Direkteinspritzung, sondern wird bspw. mittels Saugrohreinspritzung oder über eine der Verdichtung vorgelagerten Brenngas-Luft-Gemischbildung betrieben.

Für die letztgenannten Anwendungszwecke beträgt das am Gasmotor benötigte Brenngas-Druckniveau nur wenige bar.

Der Vorteil der Erfindung kommt umso besser zum Tragen je kleiner der Druckunterschied der voll befüllten Druckgasspeicher und der für den Anwendungszweck erforderliche Druck ist. In Anbetracht der bereits seit langem verfügbaren Drucktanks von bspw. 350 bar oder 700 bar, handelt es sich im Technologiefeld der Gas-Verbrennungskraftmaschinen um eine neue Anforderung, da dies eine bessere Ausschöpfung des mitgeführten Brenngases bewirkt.

Es ist demnach das Ziel der vorliegenden Erfindung eine Vorrichtung zum Zuführen eines Brenngases resp. eines gasförmigen Kraftstoffs an einen Gasmotor zu schaffen, die die oben genannten Nachteile überwindet und insbesondere eine Erhöhung des nutzbaren Energieinhalts des Gasdruckspeichers ausgehend von seiner Vollbetankung ermöglicht. Dies gelingt mit einer Vorrichtung, die sämtliche Merkmale des Anspruchs 1 aufweist. Weitere vorteilhafte Ausgestaltungen sind dabei in den abhängigen Ansprüchen angegeben.

Nach der Erfindung ist vorgesehen, dass die Vorrichtung zum Zuführen eines Brenngases an einen Gasmotor, einen Gasdruckspeicher zum Aufnehmen von unter hohem Druck stehenden gasförmigen Kraftstoff, einen Gaszwischenspeicher zum Aufnehmen von unter mittlerem Druck stehenden gasförmigen Kraftstoff, eine Gaszuführvorrichtung zum Abgeben eines gasförmigen Kraftstoffs in einen Motorbrennraum, eine erste Gasleitung, die den Gasdruckspeicher mit dem Gaszwischenspeicher verbindet und deren Gasdurchfluss über ein erstes Ventil regelbar ist, eine zweite Gasleitung, die den Gasdruckspeicher mit dem Gaszwischenspeicher verbindet und deren Gasdurchfluss über ein zweites Ventil regelbar ist, und eine dritte Gasleitung umfasst, die den Gaszwischenspeicher mit der Gaszuführvorrichtung verbindet. Ferner ist die Vorrichtung dadurch gekennzeichnet, dass in der zweiten Gasleitung ein Kompressor angeordnet ist, um einen Druck eines vom Gasdruckspeicher hin zum Gaszwischenspeicher strömenden Brenngases zu erhöhen.

Nach der Erfindung ist es demnach möglich, den Gasdruckspeicher zunächst direkt mit dem Gaszwischenspeicher zu verbinden (über die erste Gasleitung). Bei einem "vollen" Gasdruckspeicher steht das darin gespeicherte Brenngas unter hohem Druck. Lässt man dieses Brenngas sukzessive in den Gaszwischenspeicher abströmen, von wo es über die Gaszuführvorrichtung in einen Brennraum eines Gasmotors geführt wird, verringert sich der Druck in dem Gaszwischenspeicher nach und nach. Sodann kommt es in Folge des fortwährenden Abströmens von Brenngas aus dem Gasdruckspeicher zu einem Unterschreiten eines bestimmten Druckwerts des darin gespeicherten Brenngases, sodass durch ein weiteres direktes Zuführen von Brenngas aus dem Gasdruckspeicher in den Gaszwischenspeicher der bevorzugte Solldruckwert seinem Verbraucher bspw. einem Gasmotor nicht mehr bereitgestellt werden kann.

In diesem Zustand wird die Fluidverbindung über die erste Gasleitung durch ein Schließen des ersten Ventils unterbrochen. Das im Gasdruckspeicher vorhandene Brenngas kann dann durch Öffnen des zweiten Ventils über die zweite Gasleitung zu einem Kompressor geführt werden, der das aus dem Gasdruckspeicher stammende Brenngas komprimiert, so dass der gewünschte Solldruckwert des Gases im Gaszwischenspeicher erreichbar ist.

Vorteil hieran ist, dass der Gasdruckspeicher deutlich besser entleert werden kann, als dies ohne die mit dem Kompressor versehene zweite Gasleitung der Fall gewesen wäre. Schließlich kann der Gasdruckspeicher nun auch unterhalb des Solldruckwerts des Brenngases für ein Zuführen in einen Motorbrennraum entleert werden, was die mögliche Zeitdauer resp. die mögliche Energieabgabe eines ununterbrochenen Einsatzes des Gasmotors erhöht. Das Auftanken des Gasdruckspeichers ist demnach nicht mehr so oft erforderlich, da ein höherer Anteil der im Gasdruckspeicher vorhandenen Gasmenge nutzbar ist.

Nach einer optionalen Fortbildung der Erfindung kann vorgesehen sein, dass ferner eine dazu ausgelegte Steuereinheit vorhanden ist, die das erste Ventil so ansteuert, dass ein von dem Gasdruckspeicher in den Gaszwischenspeicher strömendes Brenngas einen mittleren Druck aufweist, und wenn das im Gasdruckspeicher verbleibende Brenngas unterhalb des mittleren Drucks abfällt, das erste Ventil zu schließen und das zweite Ventil zu öffnen, um mit Hilfe des Kompressors das unterhalb des mittleren Drucks im Gasdruckspeicher befindlichen Brenngases portionsweise auf den mittleren Druck zu bringen und diesen dem Gaszwischenspeicher zuzuführen.

Nach der Erfindung, ist es möglich, das unter hohem Druck stehende Brenngas im Gasdruckspeicher direkt in den Gaszwischenspeicher einzuleiten, solange der gewünschte mittlere Druck (Solldruck) im Gaszwischenspeicher durch Zuleiten des Gases aus dem Gasdruckspeicher noch erreichbar ist. Dies kann nicht mehr bewerkstelligt werden, wenn der Gasdruck im Gasdruckspeicher unterhalb des mittleren Drucks, also den Solldruck des Gaszwischenspeichers fällt. Dann wird die erste Gasleitung geschlossen und die zweite Gasleitung geöffnet, über die der Gasdruck durch den Kompressor erhöht werden kann. Somit auch Brenngas aus dem Gasdruckspeicher zur Nutzung entnommen werden, das einen geringeren Druckwert als den Solldruck des Gaszwischenspeichers aufweist.

Nach der Erfindung kann ferner vorgesehen sein, dass zwischen einer Druckseite des Kompressors und dem Gaszwischenspeicher ein Rückschlagventil, vorzugsweise ein vorgespanntes Rückschlagventil, bevorzugterweise ein in seiner Vorspannung variierbares Rückschlagventil, angeordnet ist.

Das Anordnen eines Rückschlagventils verhindert das Ausströmen von Brenngas aus dem Gaszwischenspeicher. Spannt man das Rückschlagventil vor, so wird sichergestellt, dass nur Gas, welches einen bestimmten von der Vorspannung des Rückschlagventils abhängenden Druck übersteigt, in den Gaszwischenspeicher eingeführt wird. Ist die Vorspannung variabel, kann demnach der Druckwert von in den Gaszwischenspeicher eindringendem Brenngas variiert werden, was insbesondere auf die Dimensionierung des Kompressors von Vorteil sein kann.

So ist denkbar, dass ein Kompressor lediglich eine Druckdifferenz von 150 bar umsetzen kann. Sinkt der Druckwert in dem Gasdruckspeicher so weit ab, dass auch mit einem Hinzufügen von 150 bar der Solldruckwert in dem Gaszwischenspeicher nicht mehr erreicht werden kann, kann die Vorrichtung durch vornehmen anderer Maßnahmen auch mit einem verringerten Solldruckwert noch zufriedenstellende Ergebnisse liefern. Für eine solche Betriebsart kann dann die Vorspannung des Rückschlagventils herabgesetzt werden, so dass sich ein verringerter Solldruckwert in dem Gaszwischenspeicher einstellen kann. Demnach kann es von Vorteil sein, wenn das Rückschlagventil in seiner Vorspannung variabel ausgestaltet ist.

Nach einer optionalen Fortbildung der Erfindung kann vorgesehen sein, dass die Gaszuführvorrichtung dazu ausgelegt ist, das den mittleren Druck aufweisende Brenngas einem Motorbrennraum als gasförmigem Kraftstoff zuzuführen.

Die Gaszuführvorrichtung kann dabei das aus dem Gaszwischenspeicher stammende Brenngas direkt in einen Motorbrennraum eines Gasmotors einbringen. Dabei kann die Gaszuführvorrichtung das unter dem mittleren Druck stehende Brenngas taktgenau in einen Motorbrennraum einbringen. Selbstverständlich können auch eine Vielzahl von zeitlich zueinander versetzt arbeitende Motorbrennräume vorgesehen sein, die jeweils über mindestens eine eigene Gaszuführung verfügen.

Vorzugsweise kann nach der Erfindung vorgesehen sein, dass der hohe Druck einen Druckbereich von 550 bis 850 bar, vorzugsweise von 600 bis 800, bevorzugterweise von 650 bis 750 bar entspricht, und der mittlere Druck einen Druckbereich von 150 bis 500 bar, vorzugsweise von 250 bis 400 bar und bevorzugterweise von 200 bis 350 entspricht.

Demnach ist es also möglich, dass in dem Gasdruckspeicher das Brenngas unter einem höheren Druck gespeichert wird, als in dem Gaszwischenspeicher. Ist der Gasdruckspeicher vollständig gefüllt, kann das sich darin befindende Brenngas ein Druckniveau von 550-850 bar aufweisen. Ein typischer Druckwert ist hierbei 700 bar. In dem Gaszwischenspeicher wird das Brenngas bei einem Druckniveau von 150 bis 500 bar aufgenommen, wobei ein typischer Wert hierfür bei 320 bar liegt. Aus dem Gaszwischenspeicher wird über die Gaszuführvorrichtung das Brenngas bevorzugt über einen Druckregler in den Motorbrennraum eingespritzt.

Nach einer weiteren vorteilhaften Modifikation der Erfindung kann vorgesehen sein, dass der Gasdruckspeicher ein größeres Speichervolumen, vorzugsweise ein mindestens 10-mal größeres Speichervolumen, bevorzugterweise ein mindestens 25-mal größeres Speichervolumen als der Gaszwischenspeicher aufweist.

So kann der Gasdruckspeicher bspw. ein Volumen von 1500-2000 Liter aufweisen und der Gaszwischenspeicher ein Volumen von 20 bis 50 Liter.

Vorzugsweise ist der Gaszwischenspeicher und/oder ein Gasleitungsabschnitt zwischen dem Kompressor und dem Gaszwischenspeicher mit einem Wärmetauscher versehen, wobei der Wärmetauscher vorzugsweise an dem Hauptkühlkreislauf des Gasmotors angeschlossen ist.

Der Wärmetauscher kann dann von Nutzen sein, wenn das im Gasdruckspeicher vorhandene Brenngas einen Druck unterhalb des Drucks für den Gaszwischenspeicher aufweist. In diesem Fall wird das vom Gasdruckspeicher stammende Brenngas durch den Kompressor verdichtet und dem Gaszwischenspeicher zugeführt. Dabei kommt es aber zu einem Erwärmen des Gases, so dass ein im Motorbrennraum ablaufender Verbrennungsprozess weniger effizient abläuft. Da ein zu warmes Gas zu einer Ausdehnung und einer damit einhergehenden Verringerung der Einspritzmenge führt, ist dies problematisch. Um dies zu verhindern, wird das Brenngas stromabwärts des Kompressors mit einem Wärmetauscher gekühlt. Der Wärmetauscher kann dabei mit einem Hauptkühlkreislauf eines Gasmotors zusammenwirken.

Weiter kann nach der Erfindung vorgesehen sein, dass die Vorrichtung ferner mit einer Steuereinheit versehen ist, die dazu ausgelegt ist, dann, wenn das im Gasdruckspeicher verbleibende Brenngas unterhalb des mittleren Drucks abfällt, die Gaszuführvorrichtung anzusteuern, um die Öffnungsdauer der BrenngasZuführung in einen Motorbrennraum zu verlängern und/oder einen Zündzeitpunkt für ein in dem Motorbrennraum befindliches zu verschieben.

Dadurch besteht die Option das Umschalten von der ersten Gasleitung auf die mit dem Kompressor versehene zweite Gasleitung weiter hinauszuzögern und somit die ansonsten vom Kompressor benötigte Energie einzusparen. Zudem ist hierbei von Vorteil, dass der Kompressor nun nicht mehr so leistungsfähig sein muss, da bei einem Unterschreiten eines ersten Druck-Schwellenwerts in dem Gasdruckspeicher der Kompressor noch nicht zum Einsatz kommt, sondern dies erst der Fall ist, wenn das im Gasdruckspeicher verbleibende Brenngas auch einen zweiten Druck-Schwellenwert unterschreitet, der kleiner ist als der erste Druck-Schwellenwert. Der Ausgabedruck des Kompressors muss demnach nur bis zum zweiten Druck-Schwellenwert sichergestellt sein, so dass die Anforderungen an den Kompressor weniger herausfordernd sind, als für den Fall, in dem der Kompressor den Ausgabedruck des Gases auf den ersten Druck-Schwellenwert liefern müsste.

Weiter kann nach einer optionalen Fortbildung der Erfindung vorgesehen sein, dass die Vorrichtung eine Steuereinheit aufweist, die dazu ausgelegt ist, dann, wenn das Druckniveau des im Gasdruckspeicher verbliebenen Brenngases unterhalb des mittleren Drucks abfällt, mindestens einen Betriebsparameter des Gasmotors zu ändern, insbesondere durch:
- Verwenden eines geänderten Motordatensatzes, der bspw. in Bezug auf den geringeren Raildruck eine Leistungsanhebung unter dem Nachteil eines reduzierten Wirkungsgrades erwirkt,
- Absenken einer Ladeluft-Temperatur durch Erhöhung der Kühlleistung,
- Abmagern eines Gemisches im Motorbrennraum durch Erhöhung der Ladeluftmenge und gleichzeitiger Erhöhung der Ladeluft-Kühlleistung,
- Vornehmen einer externen Abgasrückführung mit einer Abgasrückführungs-Kühlung,
- Zuschalten einer internen Abgasrückführung, und/oder
- Vornehmen einer Wassereinspritzung z.B. in die Ladeluft und/oder in einen Abgasrückführungspfad.

Die Motorsteuerung kann demnach an den nun geringeren Druck des Brenngases angepasst werden. Die Hinzunahme des in der zweiten Gasleitung angeordneten Kompressors kann demnach auch erst bei einem weiter abgefallenen Druck des Gases in dem Gasdruckspeicher vorgesehen sein.

Nach der Erfindung kann ferner vorgesehen sein, dass die Vorrichtung mit einem Gasmotor versehen ist, bei dem die Gaszuführung über eine Direkteinspritzung erfolgt, wobei der Gasmotor insbesondere ein Wasserstoffmotor sein kann ist, der dazu ausgelegt ist, Wasserstoff oder ein Wasserstoffgemisch in einem Motorbrennraum zu verbrennen.

Nach einer optionalen Modifikation der vorliegenden Erfindung kann vorgesehen sein, dass der Gasdruckspeicher aus einer Vielzahl von miteinander verbundenen Gasdruckspeichereinheiten besteht. So kann bspw. eine der mehreren Gasdruckspeichereinheiten ein Volumen von 300 Litern aufweisen, wobei insgesamt 5 bis 7 solcher Gasdruckspeichereinheiten einen Gasdruckspeicher bilden. Das Ausbilden des Gasdruckspeichers durch mehrere Speichereinheiten ermöglicht das variable Anbringen der in ihren Abmessungen doch beträchtlichen Speichereinheiten.

Ferner kann vorgesehen sein, dass die die Gaszuführvorrichtung umfassenden einzelnen Gasinjektoren über ein gemeinsames Rail das jeweils in den Motorbrennraum abzugebende unter Druck stehende Brenngas beziehen, wobei vorzugsweise das Rail in der dritten Gasleitung angeordnet ist. Das Rail ist also eine gemeinsame an mindestens zwei der mehreren Gasinjektoren angebundene Leitung, über das die Gaszuführinjektoren das in den Motorbrennraum abzugebende Brenngas beziehen.

Die Erfindung betrifft zudem eine mobile Arbeitsmaschine, insbesondere ein Raupenkran mit einer Vorrichtung nach einer der vorstehend diskutierten Varianten.

Dabei kann vorgesehen sein, dass die mobile Arbeitsmaschine ferner mit einer Rekuperationsvorrichtung zum Wandeln von kinetischer Energie in elektrische Energie versehen ist, wobei die mobile Arbeitsmaschine dazu ausgelegt ist, die elektrische Energie zum Betreiben des Kompressors zu verwenden, vorzugsweise wobei die aus kinetischer Energie gewandelte elektrische Energie alternativ oder ergänzend vor dem Zuführen zum Kompressor in einer Batterie zwischengespeichert wird.

Alternativ oder zusätzlich kann dabei vorgesehen sein, dass die mobile Arbeitsmaschine ferner mit einer Rekuperationsvorrichtung zum Wandeln von kinetischer Energie in hydraulische Energie versehen ist, wobei die mobile Arbeitsmaschine dazu ausgelegt ist, die hydraulische Energie zum Betreiben des Kompressors zu verwenden, insbesondere durch Zuführen der hydraulischen Energie an einen den Kompressor antreibenden Hydraulikmotor, vorzugsweise wobei die aus kinetischer Energie gewandelte hydraulische Energie in einem hydraulischen Druckspeicher zwischengespeichert wird.

Weitere Vorteile, Merkmale und Einzelheiten der Erfindung werden aufgrund der nachfolgenden Figurenbeschreibung ersichtlich. Dabei zeigen:
- Fig. 1a:: eine Ausführungsform der vorliegenden Erfindung,
- Fig. 1b:: eine weitere Ausführungsform der vorliegenden Erfindung,
- Fig. 2:: einen beispielhaften Betriebszyklus eines Verbrennungsmotors einer erfindungsgemäßen mobilen Arbeitsmaschine, und
- Fig. 3:: einen zum Betriebszyklus aus Fig. 2 zugehörigen Brenngasverbrauch resp. Kraftstoffverbrauch.

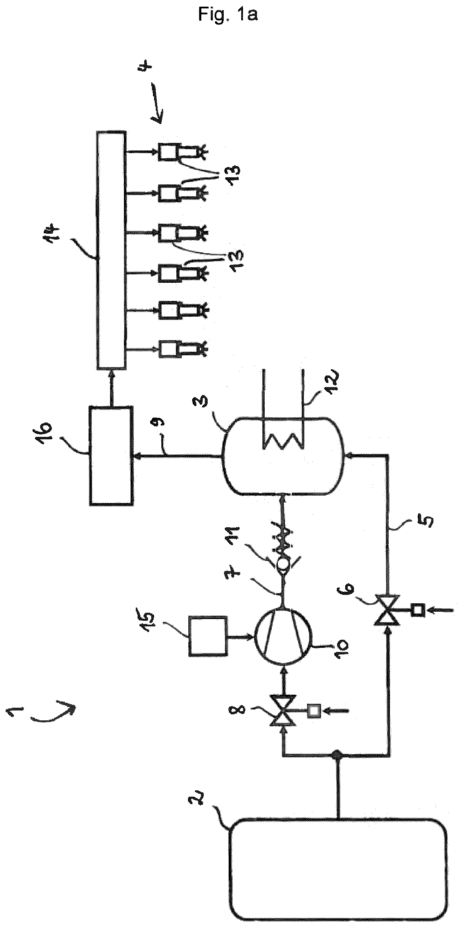

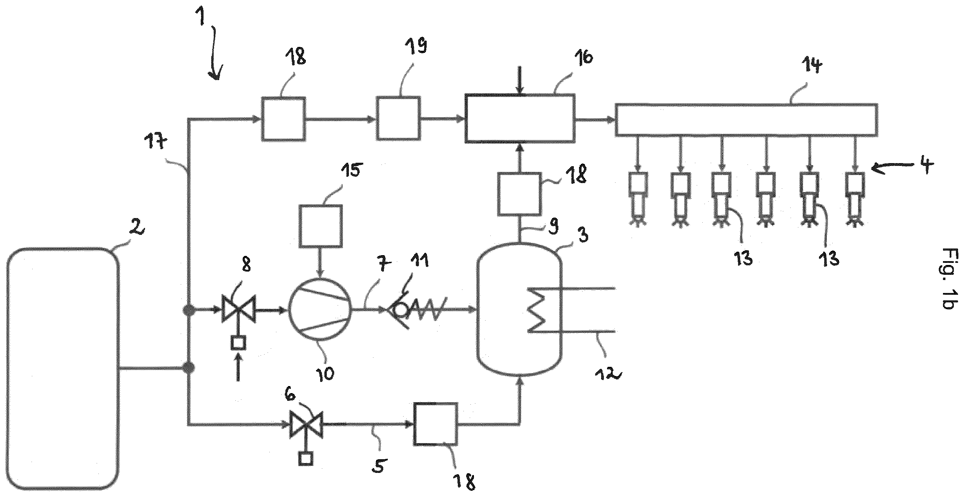

Fig. 1 zeigt eine schematische Darstellung der erfindungsgemäßen Vorrichtung 1. Man erkennt einen Gasdruckspeicher 2, der bevorzugt aus mehreren Einzelspeichern besteht. Dabei kann auch vorgesehen sein, dass dieser ein Leitungssystem aufweist, welches eine Betankung aller mehreren Einzelspeicher und eine Gasentnahme über einen jeweiligen gemeinsamen Anschluss ermöglicht.

Die Vorrichtung 1 weist eine erste Gasleitung 5 und eine zweite Gasleitung 7 zu einem Gaszwischenspeicher 3 auf. Über die erste Gasleitung 5, wird bei einem geöffneten Ventil 6 und einem Druckbegrenzer 17 eine Gasverbindung zwischen dem Gasdruckspeicher 2 und einem Gaszwischenspeicher 3 erzeugt.

Bei einem geöffneten Ventil 8 besteht eine Gasverbindung zwischen dem Gasdruckspeicher 2 und der Unterdruckseite eines Kompressors 10. Sofern keine Gasentnahme aus dem Gasdruckspeicher 2 vorgesehen ist, sind die beiden Ventile 6, 8 in der jeweiligen Gasleitung 5, 7 geschlossen.

In der Fig. 1 ist der Gasmotor aus Gründen der Übersicht nicht komplett dargestellt, sondern lediglich der Brenngaspfad inklusive der Gaszuführvorrichtung 4.

Sofern der Brenngasdruck im Gasdruckspeicher 2 in Bezug auf seine Auslegung noch über einem ersten Schwellenwert von bspw. 320 bar liegt, ist bei Betrieb des Gasmotors das erste Ventil 6 geöffnet und das zweite Ventil 8 geschlossen. Der erste Schwellenwert entspricht einem Druckwert bei dem das Brenngas unter dem bevorzugten Soll-Druck direkt in den Brennraum des Gasmotors zugeführt werden kann. Dieser erste Schwellenwert ist kleiner als der maximale Druck, mit dem der Gasdruckspeicher befüllt werden kann.

In einer vorgesehen ersten Betriebsart wird das dem Gasmotor zugeführte Brenngas aus dem Gasdruckspeicher 2 entnommen und über das geöffnete erste Ventil 6, den Druckbegrenzer 17, den Gaszwischenspeicher 3, die steuer- bzw. regelbare Einheit 16 zur Einstellung des Raildrucks, das Rail 14 und schließlich über einen geöffneten Injektor 13 einem Brennraum zugeführt. Der Gaszwischenspeicher 3 dient in dieser Betriebsart lediglich zur Reduzierung von Druckschwankungen des an den Gasmotor geführten Brenngases.

Ohne die Druckbegrenzung 16, müsste der Gaszwischenspeicher 3 wesentlich druckfester sein. Dennoch ist vorstellbar, dass ohne einen Druckbegrenzer 16 durch ein gepulstes Ausgeben von Gas aus dem Gaszwischenspeicher 3 das gewünschte Druckniveau in dem Rail 14 gehalten werden kann. Besser und einfacher gelingt dies aber mit dem Druckbegrenzer 16.

In einer konkreten Ausführung kann es sich um einen 6-Zylinder Wasserstoffmotor handeln, der eine Maximalleistung in einem Bereich von 360 kW bis 400 kW aufweist. Der bevorzugte Raildruck, d.h. ein erster Sollwert des Raildrucks kann im Bereich von 300 bar liegen. Dabei kann der Gasdruckspeicher 2 auf ein Druckniveau von etwa 700 bar ausgelegt sein. Ferner kann vorgesehen sein, dass der Gaszwischenspeicher 3 auf einen Maximaldruck von 450 bar oder weniger, bspw. 400 bar oder 350 bar ausgelegt ist.

Nach einer gewissen Betriebsdauer des Gasmotors und der damit einhergehenden fortwährenden Entnahme von Brenngas aus dem Gasdruckspeicher 2 nähert sich der Druck im Gasdruckspeicher 2 einem ersten Druck-Schwellenwert von bspw. 320 bar an. Sofern der Brenngasdruck im Gasdruckspeicher 2 nicht mehr oberhalb dieses ersten Druck-Schwellenwert liegt, kann dem Rail 14 nicht mehr das bevorzugte Druckniveau von bspw. 300 bar über die Gasleitung 5 zur Verfügung gestellt werden.

Nach der Erfindung kann demnach eine zweite Betriebsart vorgesehen sein, bei der rechtzeitig vor dem Erreichen dieses ersten Schwellenwertes das zweite Ventil 8 geöffnet ist, und der Kompressor 10 betrieben wird. So erfolgt die Brenngaszuführung von dem Gasdruckspeicher 2 in den Gaszwischenspeicher 3 über die zweite Gasleitung 7, wobei durch den Kompressor 10 das Druckniveau auf angehoben wird, damit dem Rail 14 ausgehend vom Gaszwischenspeicher 3 weiterhin das bevorzugte Druckniveau von bspw. 300 bar bereitgestellt werden kann.

Der erfindungsgemäße Aufbau der Vorrichtung 1 ermöglicht ein unterbrechungsfreies Umschalten dieser beiden Betriebsarten der Brenngasversorgung, wobei in der ersten Betriebsart das Brenngas direkt aus dem Gasdruckspeicher 2 über das erste Ventil 6 bezogen wird, und in der zweiten Betriebsart das vom Gasdruckspeicher 2 stammende Brenngas über die zweite Gasleitung 7 unter Nutzung eines Kompressors 10 in seinem Druckniveau angehoben wird und dadurch im Gaszwischenspeicher 3 ein Brenngasvorrat unter einem ausreichend hohen Druck zur Verfügung steht, um dem Rail den bevorzugten Solldruck von bspw. 300 bar bereitstellen zu können.

Bevorzugt sieht die erfindungsgemäße Brenngasversorgung eine Kühlmöglichkeit des durch den Kompressor 10 verdichteten Brenngases vor. Diese kann über einen im Gaszwischenspeicher 3 eingebauten Wärmetauscher 12 erfolgen. Beispielhaft könnte die Sekundärseite des Wärmetauschers 12 an den Hauptkühlkreislauf des Gasmotors angeschlossen sein. Alternativ oder ergänzend könnte ein Wärmetauscher 12 an einer anderen Stelle der erfindungsgemäßen Brenngasversorgung installiert sein, etwa entlang des Pfades zwischen dem Kompressor 10 und dem Gaszwischenspeicher 3.

Die erfindungsgemäße Brenngasversorgung ermöglicht eine Brenngasentnahme aus dem Gasdruckspeicher 2 unter Zuführung seiner Nutzungsbestimmung bis zu einem Druckniveau, welches sehr viel geringer als der erste Schwellenwert von bspw. 320 bar ist. Um einerseits einen hohen Anteil der im Gasdruckspeicher 2 vorhandenen Brenngasmenge bis zu einer Nachbetankung ausnutzen zu können und andererseits die Anforderungen und damit die Kosten für einen geeigneten Kompressor 10 in Grenzen zu halten, ist eine Gasentnahme bis zu einem Absinken des Druckniveaus auf einen zweiten Druck-Schwellenwert, der bspw. bei etwa 50 bar liegen kann, vorgesehen. Als vorteilhaft für die Umsetzung eines Kompressors 10 hat sich ein Kolbenkompressor herausgestellt.

Als weiter wichtig für die Auslegung des Kompressors 10 und seines Antriebes 15 ist die Anforderung, dass bis zum Erreichen des zweiten Druck-Schwellenwerts in dem Gasdruckspeicher 2 ist die Sicherstellung, dass ein ausreichend hoher Massenstrom an verdichtetem Brenngas dem Gaszwischenspeicher 3 zugeführt werden kann, um den Gasmotor in dem Arbeitspunkt seiner maximalen Abgabeleistung betreiben zu können. Dabei ist klar, dass in konkreten Anwendungen diese Anforderung entschärft werden kann, bspw. indem nur der Arbeitsbereich des Gasmotors betrachtet wird, der tatsächlich in der Anwendung genutzt wird oder indem ein Gaszwischenspeicher 3 mit einer ausreichend hohen Kapazität (z.B. die Auslegung 350 bar oder 400 bar und 25 l) verwendet wird, wodurch kurzzeitige Lastspitzen des Gasmotors abgefangen werden können. Dies ist jedoch nur dann sinnvoll, wenn in der Anwendung lediglich kurzeitige Lastspitzen auftreten.

In einer bevorzugten Ausführung der Erfindung kann vorgesehen sein, dass der Kompressor 10 nur in einem einzigen Arbeitspunkt und dementsprechend in einem Pulsbetrieb arbeitet. Auf diese Weise kann der Kompressor 10 mit seinem Antrieb im systemischen Bestpunkt betrieben werden oder zumindest unter einem besonders hohen Systemwirkungsgrad. Besonders bevorzugt wird der Kompressor bei dem Absinken des Brenngasdrucks im Gaszwischenspeicher auf einen dritten Schwellenwert von bspw. 330 bar eingeschaltet und schaltet sich bei Erreichen eines vierten Schwellenwertes von bspw. 350 bar ab.

Ausgehend von der Betriebssituation eines vollständig befüllten Gasdruckspeichers 2 kann das Brenngas über die erste Gasleitung 5 zum Gaszwischenspeicher 3 strömen und die Gaszuführeinrichtung 4 mit dem ersten Sollwert des Raildrucks von bspw. 300 bar betrieben werden. Sofern der erste Druck-Schwellenwert im Gasdruckspeicher 2, der exemplarisch 320 bar betragen soll, unterschritten wird, kann unter Ausübung einer dritten Betriebsart bis zum Erreichen eines weiteren unterhalb davon gelegenen fünften Druck-Schwellenwerts, der bspw. 220 bar betragen kann, ein Betrieb erfolgen, bei dem das Brenngas der Gaszuführeinrichtung 4 weiterhin über die Gasleitung 5 versorgt wird. Dies erfordert allerdings eine Absenkung des Raildrucks auf einen zweiten Sollwert von bspw. 200 bar, welcher unterhalb des fünften Druck-Schwellenwertes liegen muss. Dass sich aufgrund des abgesenkten Soll-Raildrucks das Leistungsabgebvermögen des Gasmotors vermindert, kann durch anderweitige Massnahmen (s.u.) vermieden werden.

Ausgangspunkt der dritten Betriebsart ist eine Absenkung des Brenngasdrucks im Gaszwischenspeicher 3 auf einen fünften Druck-Schwellenwert von bspw. 220 bar, der unterhalb des ersten Druck-Schwellenwertes von bspw. 320 bar liegt.

Es ist klar, dass unter Vorgabe des fünften Druck-Schwellenwerts von bspw. 220 bar in dem Gaszwischenspeicher 3 die Versorgung zunächst über die erste Gasleitung 5 erfolgen kann. Sobald der Gasdruck im Gasdruckspeicher 2 unter den fünften Druck-Schwellenwert absinkt, erfolgt die Gasversorgung über die zweite Gasleitung 7 mit dem Kompressor 10.

Befindet sich unter dieser dritten Betriebsart der Gasdruck in dem Gasdruckspeicher 2 unter dem ersten Soll-Druckwert (von bspw. 320 bar), jedoch oberhalb des fünften Soll-Druckwerts (von bspw. 220 bar), würde bei einer unveränderten Betriebsführung des Gasmotors und/oder der Gaszuführeinrichtung 4 dem Motorbrennraum eine nicht mehr leistungsabdeckende Brenngasmenge zur Verfügung stehen.

Zur Vermeidung muss durch die Motorsteuerung auf ein anderer, eigens dafür vorgehaltener Parametersatz zur Anwendung kommen, der sich insbesondere auf die Steuerung bzw. Regelung der Brenngaseinspritzung auswirkt.

Damit dem Brennraum unter Reduzierung des Raildrucks die gleiche Menge an Brenngas zugeführt wird, kann durch eine Steuerungs- oder Regelungseinheit die Öffnungsdauer des betreffenden Injektors 13, oder allgemeiner der Gaszuführvorrichtung 4, entsprechend verlängert werden. Dadurch lässt sich auch bei einem abgesunkenen Brenngas-Druck zumindest in gewissen Grenzen die gleiche Motorleistung erzielen. Weiter kann auch eine Anpassung des Einspritzbeginns sinnvoll oder notwendig sein. Alternativ oder ergänzend kann eine Verschiebung des Zündwinkels sinnvoll oder notwendig sein. Sind entsprechende Eingriffe vorgesehen, dann erfolgen die Verschiebungen des Einspritzbeginns und/oder des Zündwinkels bevorzugt in Richtung der unteren Kolben-TotpunktStellung des Motors.

Damit der Gasmotor seinen vollen Leistungsbereich bei einem erfindungsgemäßen Betrieb gemäß dieser dritten Betriebsart abdecken kann, bei der der zweite Sollwert des Raildrucks von bspw. 200 bar Gültigkeit hat, der niedriger als der erste Sollwert des Raildrucks von bspw. 300 bar ist kann ein Eingriff in die Betriebsführung des Gasmotors vorgesehen sein. Ein solcher Eingriff kann eine oder eine Kombination der nachfolgend genannten Maßnahmen sein:
- Verwendung eines anderen eigens dafür bereit gehaltenen geänderten Motordatensatzes, der in Bezug auf den geringeren Raildruck eine Leistungsanhebung bspw. unter dem Nachteil eines reduzierten Wirkungsgrades erwirkt
- Absenkung der Ladeluft-Temperatur durch Erhöhung der Kühlleistung
- Abmagerung durch Erhöhung der Ladeluftmenge und gleichzeitiger Erhöhung der Ladeluft-Kühlleistung
- Externe (AGR) Abgasrückführung mit AGR-Kühlung
- Zuschaltbare interne AGR
- Wassereinspritzung z.B. in die Ladeluft und/oder in den AGR-Pfad.

Fig. 1b ist eine modifizierte Ausführungsform der vorliegenden Erfindung. Die dort abgebildete Vorrichtung 1 ist um eine weitere Gasleitung 17, die vierte Gasleitung 17 erweitert, welche sich ausgehend vom Druckgasspeicher 2 über ein optional vorsehbares weiteres Stellventil, einen Druckbegrenzer 18 und einen Drucktank 19, der lediglich zur Abschwächung von Druckschwankungen benötigt wird und daher vergleichsweise sehr klein sein kann, zu der Gasdrucksteuereinheit 16 für die Einstellung des Raildrucks erstreckt. Diese Modifikation erlaubt eine bedarfsgerechte Nutzung des Kompressors 10.

Wenn das Druckniveau im Gasdruckspeicher 2 einen Wert zwischen dem ersten Druckschwellenwert von bspw. 320 bar und dem fünften Druckschwellenwert von bspw. 220 bar aufweist, wird Gas über die vierte Gasleitung 17 gefördert. Im Fall niedriger bis mittlerer Leistungsanforderungen an den Gasmotor hat der zweite Sollwert des Raildrucks von bspw. 200 bar Gültigkeit und im Fall hoher Leistungen hat der erste Sollwert des Raildrucks von bspw. 200 bar Gültigkeit bei 300 bar. Anders ausgedrückt kann also in Abhängigkeit der erforderlichen Motorlast der Raildruck variieren. Bei Gültigkeit des zweiten Raildruck-Sollwertes von bspw. 200 bar, also bspw. einer geringen Lastanforderung, erfolgt die Brenngasversorgung bevorzugt über die vierte Gasleitung 17 direkt aus dem Gasdruckspeicher 2, wobei das darin aufgenommene Gas einen ausreichend hohen Druck besitzt, um den erforderlichen Raildruck zu erzeugen. Im Gaszwischenspeicher 3 wird ein Druckniveau von bspw. 230 bar, welches auf jeden Fall etwas oberhalb des fünften Druckschwellenwertes von bspw. 220 bar liegt, bereitgehalten. Sofern ausgehend von einer niedrigen bis mittleren Belastung des Gasmotors eine hohe Leistungsanforderung eintritt, erfolgt durch ein entsprechendes Umschalten der Ventile für die verschiedenen von dem Gasdruckspeicher abgehenden Gasleitungen 5, 7, 17 eine Brenngasversorgung des Gasmotors aus dem Gaszwischenspeicher 3 über die zweite Gasleitung 7. Letzteres ermöglicht eine unter Nutzung des Kompressors 10 ein Anheben des Raildrucks auf seinen ersten Sollwert von bspw. 300 bar, der bei einer hohen Leistungsanforderung im Rail herrschen muss.

Der große Vorteil hierbei liegt darin, dass dem Kompressor 10 insgesamt weniger Energie zugeführt wird, weil während dieser Betriebsart eine geringere Menge an Brenngas ausgehend von einem Druckniveau zwischen dem ersten und fünften Druckschwellenwert über den Kompressor 10 auf ein entsprechend höheres Druckniveau angehoben werden muss, welches einen Betrieb des Gasmotors unter dem ersten Sollwert des Raildrucks von bspw. 300 bar ermöglicht. Liegt der Momentandruck im Druckgasspeicher 2 innerhalb Bereiches zwischen dem ersten Druckschwellenwert und dem fünften Druckschwellenwert, wird der höhere Sollwert des Raildrucks nur dann abgefordert, wenn ein erhöhter Raildruck, der unter einem onboard aufgewendeten Energieeinsatz bereitgestellt werden muss, aufgrund einer hohen Leistungsanforderung an den Gasmotor unter Mehrwert eingesetzt werden kann. Hingegen besitzt während dieser weiteren Betriebsart im unteren und mittleren Teillastbetrieb des Gasmotors der zweite Raildruck-Sollwert von bspw. 200 bar Gültigkeit, weil hierbei in Bezug auf den Gasmotor eine Kompensation des geringeren Raildrucks durch eine einfache Anpassung der Brenngas-Eispritzzeiten möglich ist und daher keine oder kaum merkliche Effizienznachteile nach sich zieht. Jegliche weitere der vorgenannten Maßnahmen einer geänderten Betriebsführung des Gasmotors, die zu höheren Wirkungsgradverlusten führen, können hingegen unterbleiben.

Das gleiche Prinzip kann selbstverständlich auf andere Betriebsarten angewendet werden, wenn das Druckniveau im Gasdruckspeicher 2 einen Wert zwischen dem zweiten Druckschwellenwert von bspw. 220 bar und einem dritten Druckschwellenwert von bspw. 170 bar aufweist. Gleichermaßen kann bei der vierten Betriebsart eine Brenngas-Versorgung des Gasmotors über die vierte in der Fig. 1b abgebildete Leitung 17 erfolgen, was allerdings nur für den unteren Lastbereich bevorzugt wird. Auch in dieser Betriebsart wird im Gaszwischenspeicher 3 ein Brenngasvorrat auf einem Druckniveau von bspw. 330 bar bereitgehalten, um auch hier kurzfristig auf einen Hochlastbetrieb des Gasmotors umschalten zu können.

Weiter kann vorgesehen sein, dass ein mit der erfindungsgemäßen Vorrichtung versehene mobile Arbeitsmaschine eine Rekuperationsvorrichtung aufweist. Damit eine momentan verfügbare Rekuperationsleistung zu einem späteren Zeitpunkt genutzt werden kann, werden technische Systeme bekanntermaßen mit Energiespeichern ausgerüstet.

In bestimmten Anwendungsfeldern der Erfindung ist eine Energiekuperation möglich. Bei der Anwendung eines Gasmotors, der zusammen mit einer erfindungsgemäßen Vorrichtung in einer mobilen Arbeitsmaschine eingesetzt wird, kann z.B. überschüssige kinetische Energie anfallen. Im Falle einer als Kran ausgebildeten mobilen Arbeitsmaschine etwa beim Absenken von Lasten oder bei Bremsvorgängen während der Fahrbewegung. Wie hinreichend bekannt, kann in solchen Betriebssituationen Rotationsenergie durch generatorisch betriebene elektrische Maschinen in elektrische Energie umgewandelt werden, die wiederum in einer Batterie und/oder einem Doppelschichtkondensator gespeichert werden kann.

Eine Fortführung der Erfindung sieht vor, dass zumindest ein Anteil dieser rekuperierten bzw. rekuperierbaren Energie zur Leistungsversorgung des Kompressors 10 genutzt wird. Für den Fall, dass das Brenngas-Druckniveau im Gasdruckspeicher 3 bereits unterhalb eines Druck-Schwellenwerts abgefallen ist, kann die anfallende Rekuperationsleistung unmittelbar dem Kompressor 10 zugeführt werden, damit diesem aus dem Gasdruckspeicher 2 Brenngas zugeführt wird, um es entsprechend zu verdichten, sodass es dem Gaszwischenspeicher 3 zugeführt werden kann. Auf diese Weise wird ohne das Aufwenden von Energie, die eigens dafür aus dem Gasdruckspeicher entnommen werden muss, die Prozessenergie zur Verfügung gestellt, um eine Anhebung des Druckniveaus resp. eine Erhöhung des Brenngasvorrats im Gaszwischenspeicher zu erbringen, welches dann dem Gasmotor in solchen Betriebssituationen zugeführt wird, wenn sich aufgrund des hohen Brenngas-Einspritzdrucks von bspw. 300 bar ein Wirkungsgradvorteil ergibt, z.B. im Hochlastbetrieb.

Alternativ oder ergänzend können zeitgleich ggf. vorhandene weitere Energiespeicher geladen werden. In einer beispielhaften Ausführung könnte der Kompressor 10 mit einer elektrischen Maschine 15 angetrieben werden, die über die Bordnetzbatterie versorgt wird. Auf diese Weise wird der ohnehin vorhandene Gaszwischenspeicher 3 Rekuperationsenergie zugeführt, die von einer ggf. vollgeladenen Bordnetzbatterie gar nicht mehr aufgenommen werden könnte. Gegebenenfalls kann es hierbei sinnvoll sein, den Gasmotor mit einer leistungsstärkeren Lichtmaschine auszustatten und/oder mindestens mit einer weiteren Lichtmaschine resp. mit einem zusätzlichen Generator.

Optional kann selbstverständlich eine Bordnetzbatterie mit einer höheren Kapazität und/oder zusätzliche Batterie zur Speicherung von elektrisch rekuperierter Energie verwendet werden. Dabei kann der ohnehin benötigte Gaszwischenspeicher 3 je nach Betrachtungsweise als unmittelbarer Verwerter oder als Energiespeicher von Rekuperationsleistung verwendet werden.

Ergänzend oder alternativ kann ein Generator zum Abgriff von Rekuperationsleistung auch derart angebaut werden, dass er außerhalb des Gasmotors Rekuperationsleistung aufnehmen kann, im Beispiel einer mobilen Arbeitsmaschine am Verteilergetriebe oder im Kraftschluss mit einer Hydraulikmaschine über deren Triebwelle in bestimmten Betriebssituationen Rekuperationsleistung anfällt.

Alternativ oder ergänzend kann mindestens ein elektrischer Energiespeicher zum Einsatz kommen, der auf Doppelschichtkondensatoren basiert. Im Unterschied zu Batteriezellen weisen Doppelschichtkondensatoren eine deutlich höhere Leistungsdichte jedoch eine geringere Energiedichte auf. Sofern an einer mobilen Arbeitsmaschine prädestinierte Stellen für das Auftreten kurzzeitig sehr hohe Rekuperationsleistung existieren und ein entsprechend leistungsfähiger Generator zur elektrischen Rekuperation vorgesehen ist, kann die Verwendung von Doppelschichtkondensatoren besonders sinnvoll sein. Die Doppelschichtkondensatoren können die hohen elektrischen Leistungen speichern, die nachfolgend dem den Kompressor 10 antreibenden vergleichsweise leistungsschwachen Elektromotor zur Verfügung gestellt werden. Im Allgemeinen sind Doppelschichtkondensatoren resistenter gegen niedrige sowie resistenter gegen hohe Temperaturen und weisen eine höhere Lade-Entlade-Zyklenfestigkeit auf als Batterien.

Alternativ oder ergänzend ist ein Antrieb des Kompressors über einen Hydraulikmotor möglich. In einer möglichen Ausführung wird dieser Hydraulikmotor durch eine Hydraulikpumpe versorgt, die sich bspw. an einem Nebenabtrieb des Gasmotors befinden kann oder an dem Verteilergetriebe angebaut ist. Bevorzugt wird die Hydraulikpumpe an einer Stelle im Antriebssystem installiert, an der zeitweise Rekuperationsleistung anfällt. Alternativ kann anstelle einer separaten Hydraulikpumpe ein für die Primärfunktionen der mobilen Arbeitsmaschine benötigter Hydraulikmotor durch eine hydraulische Maschine ersetzt werden, die bei anfallender Rekuperationsleistung im Pumpenbetrieb arbeitet. Bei anfallender Rekuperationsleistung kann diese direkt dem den Kompressor 10 antreibenden Hydraulikmotor zugeführt werden. Damit höhere Rekuperationsleistungen abgegriffen werden können, kann ein hydraulischer Druckspeicher zur Aufnahme von anfallender Rekuperationsleistung installiert sein. Vergleichbar mit einem Doppelschichtkondensator kann ein hydraulischer Druckspeicher hohe Leistungen aufnehmen und weist allerdings eine niedrige Energiedichte auf. Somit können an einer Stelle, an der kurzzeitig hohe Rekuperationsleistungen anfallen diese rekuperiert und einem hydraulischen Druckspeicher zugeführt werden, die nachfolgend dem den Kompressor antreibenden Hydraulikmotor zugeführt wird.

Alternativ oder zusätzlich können mehrere Hydraulikpumpen, über die eine hydraulische Rekuperation möglich ist, verwendet werden, wobei auch mehrere hydraulische Druckspeicher zur Aufnahme von Rekuperationsleistung installiert sein können.

In einer Anwendung, in der vergleichsweise hohe Portionsmengen an Rekuperationsenergie anfallen, kann es sinnvoll sein, einen Gaszwischenspeicher mit einer höheren Kapazität (z.B. 50 l) zu verwenden.

Nachfolgend wird ein konkretes Anwendungsbeispiel einer Verbrennungskraftmaschine dargelegt, die eine Motorleistung im Bereich von 360 kW bis 450 kW aufweist und für eine mobile Arbeitsmaschine, bspw. einen sehr grossen Raupenkran mit einer Traglast für bis zu 300 t, vorgesehen sein kann. Würde diese Verbrennungskraftmaschine durch einen Wasserstoffmotor dargestellt werden, wäre dies aus heutiger Sicht ein 6-Zylindermotor mit einem Hubraum von zwei bis drei Litern pro Zylinder, der im Betriebspunkt seiner maximalen Abgabeleistung einen Wasserstoffverbrauch von 27 kg/h aufweist.

So kann vorgesehen sein, dass eine Wasserstoff-Entnahme aus dem Gasdruckspeicher 2 so lange erfolgt, bis ein Restdruck von 50 bar vorliegt.

Im Regelfall kann vorgesehen sein, dass dem Wasserstoffmotor stets ein Raildruck von 300 bar zur Verfügung steht, d.h. während des gesamten Zeitraums über den der Wasserstoffdruck im Gasdruckspeicher 2 im Zuge des Motorbetriebes von anfänglich etwa 700 bar auf 50 bar absinkt. Erfindungsgemäß führt der Kompressor 10 dem Gaszwischenspeicher 3 Wasserstoffmengen zu, damit eine Aufrechterhaltung des Raildrucks von 300 bar möglich ist. Die Maximalleistung des Kompressors 10 ergibt sich aus der Konstellation, dass der Kompressor 10 eine Verdichtung von Wasserstoff von 50 bar auf bspw. 320 bar bei einer Durchflussrate von 27 kg/h bereitstellen muss. In der Praxis wird diese Konstellation nur sehr kurzfristig auftreten und setzt die Situation voraus, dass sich der nutzbare Wasserstoffvorrat im Gasdruckspeichertank 2 gerade erschöpft während der Wasserstoffmotor unter Volllast betrieben wird. In dieser theoretischen Betriebssituation sollte der Kompressor eine mechanische Eingangsleistung von mindestens 9 kW, vorzugsweise mehr als 12 kW oder besser mindestens 14 kW aufweisen.

Bevorzugt wird die aus dem Kompressor 10 und ihrem Antrieb 16 bestehende Einheit so ausgelegt, dass bei dieser Leistung unter einem möglichst hohen Wirkungsgrad eine Verdichtung von aus dem Gasdruckspeicher 2 entnommenem Brenngas erfolgen kann, was dem Gaszwischenspeicher 3 zugeführt wird, damit hieraus eine Bereitgestellung von Brenngas unter der Erzielung eines Raildrucks von bspw. 300 bar möglich ist.

Vorzugsweise erfolgt somit das Nachladen des Gaszwischenspeichers 3 portionsweise durch einen gepulsten Betrieb des Kompressors 10. Besonders bevorzugt erfolgt ein automatisches Einschalten und Abschalten des Kompressors 10 bspw. gemäss einer einfachen Zweipunktkennlinie. Hierbei erfolgt das Einschalten des Antriebs 16 oberhalb eines bestimmten Druckniveaus im Gaszwischenspeicher 3, bei dem der Soll-Raildruck noch bereitgestellt werden kann und das Abschalten erfolgt bei einem bestimmten oberhalb davon gelegenen Druckniveau.

Gemäß der obenstehenden dritten Betriebsart, bei der dem Wasserstoffmotor ein Raildruck von 200 bar zur Verfügung steht, beläuft sich eine Anforderung der mechanischen Eingangsleistung des Kompressors von mindestens 6 kW, besser mindestens 8 kW oder gar mindestens 10 kW.

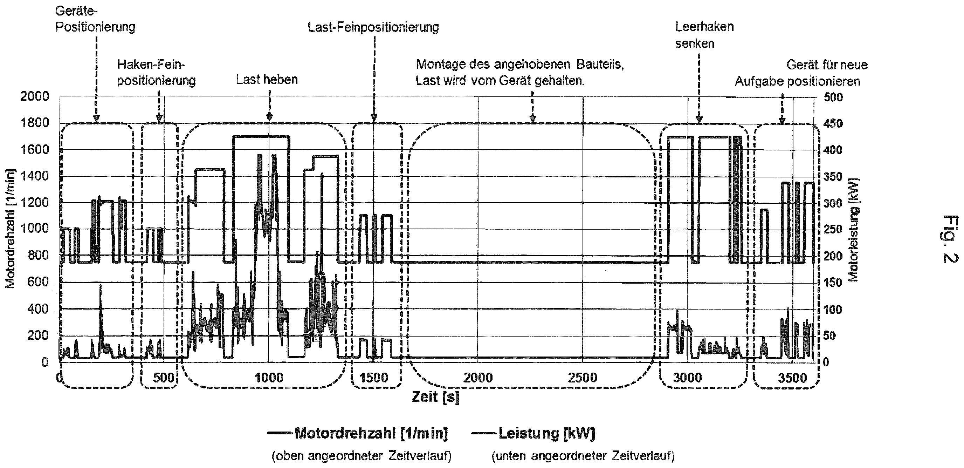

Die Fig. 2 zeigt ein Diagramm der Motordrehzahl und der Motorleistung über der Zeit. Der in dem Diagramm oben angeordnete Graph stellt dabei die Motordrehzahl dar, der darunter angeordnete Graph gibt die Motorleistung wieder. Die beiden Zeitverläufe entstammen aus einem Messschrieb eines schweren Kettenkrans in einem realen Arbeitseinsatz.

Man erkennt, dass bei diesem realen Messschrieb eines Arbeitseinsatzes des schweren Kettenkrans eine Vielzahl von Arbeitsmanövern vorliegt (*Haken-Feinpositionierung, Montage des angehobenen Bauteils* etc.) und damit lange Zeiträume vorhanden sind, während denen der Primärantrieb nur im unteren Teillastbetrieb arbeitet, wohingegen die Zeiträume, in denen der Primärantrieb im oberen Teillastbetrieb arbeitet vergleichsweise kurz sind. Für einen solchen Einsatz ist die erfindungsgemäße Zuführung des gasförmigen Kraftstoffs sehr effizient. Unter der Annahme, dass im Arbeitseinsatz während des dargestellten Messschriebs ein Brenngasdruck im Gasdruckspeicher zwischen dem ersten und dem zweiten Schwellenwert vorliegt, ist vor allem das Betreiben der Erfindung in der in Zusammenhang mit der in Fig. 1b beschriebenen Betriebsart sehr vorteilhaft. In den dominierenden Zeiträumen ist ein Betrieb des Gasmotors unter dem zweiten Raildruck-Sollwert von bspw. 200 bar möglich ohne solche Eingriffe in die Betriebsführung des Gasmotors, die zu Effizienzminderungen führen, vornehmen zu müssen. Allerdings kann sehr wohl dank der Möglichkeit, Brenngas aus dem Gaszwischenspeicher 3 zu beziehen, der Gasmotor während der Abdeckung seiner Lastspitzen unter Gültigkeit des ersten Raildruck-Sollwertes und dessen Einhaltung betrieben werden, wodurch auch in Hochlastphasen solche Eingriffe in die Betriebsführung des Gasmotors unterbleiben können, die eine erhöhte Leistungsabgabe nur unter im Zusammenhang mit einer Effizienzminderung gestatten. Dank der Möglichkeit parallel zum eigentlichen Arbeitseinsatz des schweren Kettenkrans Brenngas aus dem Gasdrucktank 2 entnehmen und über den Kompressor 10 unter einem ausreichend hohen Druck dem Gaszwischenspeicher 3 zuführen zu können, ist es möglich über längere Zeiträume den Gasmotor unter Gültigkeit und Einhaltung des ersten Raildruck-Sollwertes betreiben zu können, was im gezeigten Messschrieb ggf. innerhalb des Zeitraums, in welchem offensichtlich das eigentliche Anheben der Last erfolgt, (um die Zeit 1000 s) erforderlich sein könnte.

Soll die Abdeckung der Lastspitzen über einen Betrieb des Gasmotors unter dem ersten Raildruck-Sollwert erfolgen, derweil ein Brenngasdruck im Gasdruckspeicher 2 zwischen dem ersten Druckschwellenwert und dem fünften Druckschwellenwert vorliegt, muss die gesamte Kompressionsenergie zur Druckanhebung des Brenngases unter einem erhöhten Brenngasverbrauch erkauft werden. Bezieht man die bereits dargelegte Möglichkeit der Rekuperation als Fortführung der Erfindung in die hier angestellten Überlegungen ein, kann es möglich sein, dass ein Großteil der Energie, die vom Kompressor 10 bezogen wird, um den besagten Gasvorrat in dem Gaszwischenspeicher 3 bereitstellen zu können aus Rekuperationsenergie entnommen werden kann, anstatt einer eigens dafür erforderlichen Entnahme aus dem Gasdruckspeicher 2.
Wie bereits erörtert, ist alternativ ein Betrieb des Gasmotors unter Gültigkeit des zweiten Raildruck-Sollwertes von bspw. 200 bar möglich, erfordert aber zur Abdeckung der Lastspitzen solche Eingriffe in die Betriebsführung des Gasmotors, die zu einem erhöhten Brenngasverbrauch führen.

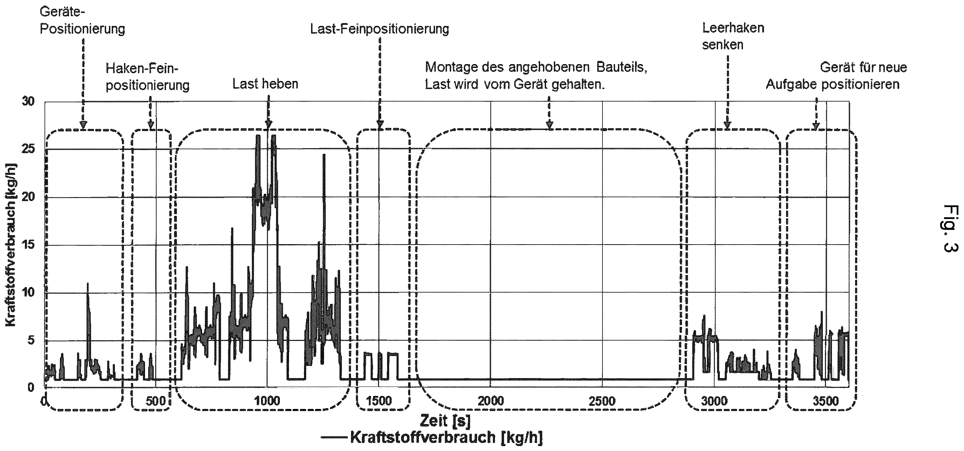

Fig. 3 zeigt den zu Fig. 2 zugehörigen Kraftstoffverbrauch in kg/h. Der in der Fig. 2 wiedergegebene Messschrieb stammt von einem mit einem Dieselmotor betriebenen schweren Raupenkran. Der in der Fig. 3 gezeigte Kraftstoffverbrauch basiert auf Simulationsergebnissen, welche sich ihrerseits auf Mess- und Simulationsergebnisse eines sich in der Entwicklung befindenden Wasserstoffmotors beziehen. Der Wasserstoffverbrauch korreliert im Wesentlichen mit der zur Verfügung gestellten Motorleistung.

### Bezugszeichenliste:

1 Vorrichtung
2 Gasdruckspeicher
3 Gaszwischenspeicher
4 Gaszuführvorrichtung
5 Gasleitung
6 erstes Ventil
7 zweite Gasleitung
8 zweites Ventil
9 dritte Gasleitung
10 Kompressor
11 Rückschlagventil
12 Wärmetauscher
13 Gaszuführinjektor
14 Rail
15 Kompressorantrieb
16 Gasdrucksteuereinrichtung
17 vierte Gasleitung
18 Druckbegrenzer
19 Ausgleichstank

## Patentansprüche

1. Vorrichtung (1) zum Zuführen eines gasförmigen Kraftstoffs an einen Motor, umfassend:
einen Gasdruckspeicher (2) zum Aufnehmen von unter hohem Druck stehenden gasförmigen Kraftstoff,
einen Gaszwischenspeicher (3) zum Aufnehmen von unter mittlerem Druck stehenden gasförmigen Kraftstoff,
eine Gaszuführvorrichtung (4) zum Abgeben eines gasförmigen Kraftstoffs in einen Motorbrennraum,
eine erste Gasleitung (5), die den Gasdruckspeicher (2) mit dem Gaszwischenspeicher (3) verbindet und deren Gasdurchfluss über ein erstes Ventil (6) regelbar ist,
eine zweite Gasleitung (7), die den Gasdruckspeicher (2) mit dem Gaszwischenspeicher (3) verbindet und deren Gasdurchfluss über ein zweites Ventil (8) regelbar ist, und
eine dritte Gasleitung (9), die den Gaszwischenspeicher (3) mit der Gaszuführvorrichtung (4) verbindet,
**dadurch gekennzeichnet, dass**
in der zweiten Gasleitung (7) ein Kompressor (10) angeordnet ist, um einen Druck eines vom Gasdruckspeicher (2) hin zum Gaszwischenspeicher (3) strömenden gasförmigen Kraftstoffs zu erhöhen.

2. Vorrichtung (1) nach Anspruch 1, ferner mit einer Steuereinheit, die dazu ausgelegt ist, das erste Ventil (6) so zu steuern, dass ein von dem Gasdruckspeicher (2) in den Gaszwischenspeicher (3) strömender gasförmiger Kraftstoff einen mittleren Druck aufweist, und wenn der im Gasdruckspeicher (2) verbleibende gasförmige Kraftstoff unterhalb des mittleren Drucks abfällt, das erste Ventil (6) zu schließen und das zweite Ventil (8) zu öffnen, um mit Hilfe des Kompressors (10) den unterhalb des mittleren Drucks im Gasdruckspeicher (2) befindlichen gasförmigen Kraftstoff auf den mittleren Druck zu bringen und diesen dem Gaszwischenspeicher (3) zuzuführen.

3. Vorrichtung (1) nach einem der vorhergehenden Ansprüche, wobei zwischen einer Druckseite des Kompressors (10) und dem Gaszwischenspeicher (3) ein Rückschlagventil (11), vorzugsweise ein vorgespanntes Rückschlagventil, bevorzugterweise ein in seiner Vorspannung variierbares Rückschlagventil, angeordnet ist.

4. Vorrichtung (1) nach einem der vorhergehenden Ansprüche, wobei die Gaszuführvorrichtung (4) dazu ausgelegt ist, den gasförmigen Kraftstoff, der den mittleren Druck aufweist, in einen Motorbrennraum einzuführen.

5. Vorrichtung (1) nach einem der vorhergehenden Ansprüche, wobei der hohe Druck einen Druckbereich von 550 bis 850 bar, vorzugsweise von 600 bis 800, bevorzugterweise von 650 bis 750 bar entspricht, und der mittlere Druck einen Druckbereich von 150 bis 500 bar, vorzugsweise von 250 bis 400 bar und bevorzugterweise von 300 bis 370 entspricht.

6. Vorrichtung (1) nach einem der vorhergehenden Ansprüche, wobei der Gasdruckspeicher (2) ein größeres Speichervolumen, vorzugsweise ein mindestens 10 mal größeres Speichervolumen, bevorzugterweise ein mindestens 25 mal größeres Speichervolumen als der Gaszwischenspeicher (3) aufweist.

7. Vorrichtung (1) nach einem der vorhergehenden Ansprüche, wobei der Gaszwischenspeicher (3) und/oder ein Gasleitungsabschnitt zwischen dem Gaszwischenspeicher (3) und dem Kompressor (10) mit einem Wärmetauscher (12) versehen ist, wobei der Wärmetauscher (12) vorzugsweise an einen Hauptkühlkreislauf des Motors angeschlossen ist.

8. Vorrichtung (1) nach einem der vorhergehenden Ansprüche, ferner mit einer Steuereinheit, die dazu ausgelegt ist, dann, wenn der im Gasdruckspeicher (2) verbleibende gasförmige Kraftstoff unterhalb des mittleren Drucks abfällt, die Gaszuführvorrichtung (4) anzusteuern, um eine Öffnungsdauer zum Abgeben eines gasförmigen Kraftstoffs in einen Motorbrennraum zu verlängern und/oder einen Zündzeitpunkt für ein in dem Motorbrennraum befindliches Gas oder Gasgemisch zu verschieben.

9. Vorrichtung (1) nach einem der vorhergehenden Ansprüche, ferner mit einer Steuereinheit, die dazu ausgelegt ist, dann, wenn der im Gasdruckspeicher (2) verbleibende gasförmige Kraftstoff unterhalb des mittleren Drucks abfällt, mindestens einen Betriebsparameter des Motors zu ändern, insbesondere durch:
Verwenden eines geänderten Motordatensatzes, der bspw. eine Leistungsanhebung unter dem Nachteil eines reduzierten Wirkungsgrades erwirkt,
Absenken einer Ladeluft-Temperatur durch Erhöhung der Kühlleistung,
Abmagern eines Gemisches im Motorbrennraum durch Erhöhung der Ladeluftmenge und gleichzeitiger Erhöhung der Ladeluft-Kühlleistung,
Vornehmen einer externen Abgasrückführung mit einer Abgasrückführungs-Kühlung,
Zuschalten einer internen Abgasrückführung, und/oder
Vornehmen einer Wassereinspritzung z.B. in die Ladeluft und/oder in einen Abgasrückführungspfad.

10. Vorrichtung (1) nach einem der vorhergehenden Ansprüche, ferner mit einem Motor, bei dem die Gaszuführung über eine Direkteinspritzung erfolgt, vorzugsweise wobei der Motor ein Wasserstoffmotor ist, der dazu ausgelegt ist, Wasserstoff oder ein Wasserstoffgemisch in einem Motorbrennraum zu verbrennen.

11. Vorrichtung (1) nach einem der vorhergehenden Ansprüche, wobei der Gasdruckspeicher (2) aus einer Vielzahl von miteinander verbundenen Gasdruckspeichereinheiten besteht.

12. Vorrichtung (1) nach einem der vorhergehenden Ansprüche, wobei die Gaszuführvorrichtung (4) mehrere einzelne Gaszuführinjektoren (13) umfasst, die über ein gemeinsames Rail (14) das jeweils in den Motorbrennraum abzugebende unter Druck stehende Gas beziehen, wobei vorzugsweise das Rail (14) in der dritten Gasleitung (9) angeordnet ist.

13. Mobile Arbeitsmaschine, insbesondere ein Raupenkran mit einer Vorrichtung (1) nach einem der vorhergehenden Ansprüche.

14. Mobile Arbeitsmaschine nach Anspruch 13, ferner mit einer Rekuperationsvorrichtung zum Wandeln von kinetischer Energie in elektrische Energie, wobei die mobile Arbeitsmaschine dazu ausgelegt ist, die elektrische Energie zum Betreiben des Kompressors (10) zu verwenden, vorzugsweise wobei die aus kinetischer Energie gewandelte elektrische Energie vor eine Zuführen zum Kompressor (10) in einer Batterie zwischengespeichert wird.

15. Mobile Arbeitsmaschine nach Anspruch 13 oder 14, ferner mit einer Rekuperationsvorrichtung zum Wandeln von kinetischer Energie in hydraulische Energie, wobei die mobile Arbeitsmaschine dazu ausgelegt ist, die hydraulische Energie zum Betreiben des Kompressors (10) zu verwenden, insbesondere durch Zuführen der hydraulischen Energie an einen den Kompressor (10) antreibenden Hydraulikmotor, vorzugsweise wobei die aus kinetischer Energie gewandelte hydraulische Energie in einem hydraulischen Druckspeicher zwischengespeichert wird.
